**Europäisches Patentamt**

**European Patent Office**

**Office européen des brevets**

(19)

(11) Veröffentlichungsnummer: **0 042 436**
**B1**

(12)

# EUROPÄISCHE PATENTSCHRIFT

(45) Veröffentlichungstag der Patentschrift:
**17.04.85**

(51) Int. Cl.[4]: **G 01 N 27/58**, G 01 N 1/22

(21) Anmeldenummer: **81900074.6**

(22) Anmeldetag: **18.12.80**

(86) Internationale Anmeldenummer:
**PCT/JP 80/00312**

(87) Internationale Veröffentlichungsnummer:
**WO 81/01882 (09.07.81 Gazette 81/16)**

(54) **MESSEINRICHTUNG ZUR ERFASSUNG DES SAUERSTOFFGEHALTES EINEN GASES.**

(30) Priorität: **27.12.79 JP 180331/79**

(43) Veröffentlichungstag der Anmeldung:
**30.12.81 Patentblatt 81/52**

(45) Bekanntmachung des Hinweises auf die Patenterteilung:
**17.04.85 Patentblatt 85/16**

(84) Benannte Vertragsstaaten:
**AT CH DE FR GB LI SE**

(56) Entgegenhaltungen:
**DE - A - 2 302 899**
**DE - B - 745 722**
**FR - A - 2 018 314**
**JP - A - 50 006 395**
**JP - A - 50 028 396**
**JP - A - 50 038 591**
**JP - B - 47 028 957**
**JP - U - 52 070 484**
**US - A - 2 814 952**
**US - A - 3 546 086**
**US - A - 3 960 500**
**US - A - 4 007 096**
**US - A - 4 098 650**
**US - A - 4 131 011**

Die Akte enthält technische Angaben, die nach dem

(73) Patentinhaber: **FUJI ELECTRIC CO., LTD., 1-1, Tanabeshinden, Kawasaki-ku, Kawasaki-shi Kanagawa 210 (JP)**

(72) Erfinder: **TANAKA, Takeo, Fuji Electric Co., LTD. 1-1, Tanabeshinden, Kawasakiku, Kawasaki-shi Kanagawa 210 (JP)**
Erfinder: **YAMAMOTO, Osamu, Fuji Electric Co., LTD. 1-1, Tanabeshinden, Kawasakiku, Kawasaki-shi Kanagawa 210 (JP)**

(74) Vertreter: **Mehl, Ernst, Dipl.-Ing., Postfach 22 01 76, D-8000 München 22 (DE)**

(56) Entgegenhaltungen: (Fortsetzung)
**Eingang der Anmeldung eingereicht wurden und die nicht in dieser Patentschrift enthalten sind.**

## Beschreibung

Die Erfindung betrifft eine Meßeinrichtung zur Erfassung des Sauerstoffgehalts eines Gases, mit einem elektrolytischen Element, das aus einem eine Sauerstoffionenleitfähigkeit aufweisenden Festkörperelektrolyten mit einer ersten und einer zweiten porösen Elektrode auf je einer Seite des Festkörperelektrolyten besteht, wobei das elektrolytische Element in einem zylindrischen Rohr untergebracht ist, wobei dem Gas zur Erzeugung einer elektromotorischen Kraft zwecks Analyse seines Sauerstoffgehaltes eine Probe entnommen wird, die unter Konvektionswirkung durch ein Ende des zylindrischen Rohres über einen Zuflußweg einströmt und mit einer ersten Elektrode in Kontakt gebracht wird, während Luft als Sauerstoffstandard durch das andere Ende des zylindrischen Rohres mit der zweiten Elektrode in Kontakt gebracht wird, und wobei ein Heizelement zur Beheizung des elektrolytischen Elements vorgesehen ist.

Eine derartige Meßeinrichtung ist aus der US-A-3 546 086 bekannt. Dabei ist das elektrolytische Element rohrförmig ausgeführt und weist sowohl an seiner Innenfläche als auch an seiner Außenfläche je eine Elektrode auf. An seiner Stirnseite ist das elektrolytische Element durch eine quer zu seiner Längsrichtung liegende Wand abgeschlossen. Konzentrisch im elektrolytischen Element ist ein Keramikrohr angeordnet, durch das Luft als Sauerstoffstandard zugeführt wird. Dieses Keramikrohr trägt in seiner Wandung ein Heizelement. Das rohrförmige elektrolytische Element ist wiederum von einem Schutzrohr umgeben, das Bohrungen aufweist, durch die das Meßgas einströmt. Durch Konvektion gerät es dabei in Kontakt mit der Oberfläche des elektrolytischen Elements. Diese bekannte Meßeinrichtung weist aufgrund ihrer Bauweise einen verhältnismäßig großen Durchmesser auf.

Aus der US-A-2 814 952 ist eine Meßeinrichtung für Gase bekannt, bei der einem strömenden Gas in einem Abgaszug ene Probe entnommen wird. Durch Konvektionswirkung und den dabei entstehenden dynamischen Gasdruck wird das Gas der Meßeinrichtung zugeführt. Das Entnahmerohr ist dabei von einem Schutzrohr umgeben.

Üblich ist es auch, eine Gasprobe dadurch zu entnehmen, daß das Gas mit einer Gasansaugeinrichtung, wie einer Pumpe, z. B. eine Saugstrahlpumpe, angesaugt und der außerhalb angeordneten Meßeinrichtung zugeführt wird. Nach dem Meßvorgang wird das Gas in die Atmosphäre entlassen. Jedoch treten hierbei als Nachteile auf, daß — da die Temperatur des Gases, die im Abgaszug hoch war, auf Raumtemperatur abgesenkt wird — Kondensat gebildet wird, das zur Korrosion und Verschmutzung des Rohrsystems führt, und daß andererseits eine Antriebsquelle zum Gasansaugen erforderlich ist.

Es ist eine Aufgabe der Erfindung, die vorstehend beschriebenen, beim Stand der Technik auftretenden Probleme zu lösen. Eine spezielle Aufgabe der Erfindung ist es, eine Meßeinrichtung zur Erfassung des Sauerstoffgehalts mit einem einen festen Elektrolyten aufweisenden elektrolytischen Element anzugeben, mit einer Direktankopplung an den das Gas enthaltenden Raum, bei der keine Kondensatbildung bei den Abgasproben auftritt und bei der eine Antriebsquelle zur Entnahme der Gasproben nicht mehr erforderlich ist. Die Meßeinrichtung soll darüber hinaus einfacher im Aufbau sein.

Diese Aufgabe wird bei einer Meßeinrichtung der eingangs genannten Art erfindungsgemäß dadurch gelöst, daß das zylindrische Rohr ein keramisches Rohr ist, in dem das elektrolytische Element derart angeordnet ist, daß es den hohlen Innenraum des keramischen Rohres — quer zu seiner Längsachse — in zwei Innenräume teilt, daß das Heizelement in der Wandung des keramischen Rohres verlegt ist, daß die Luft dem anderen Ende des zylindrischen Rohres durch in einer Abdeckung dieses Endes des Rohres befindliche Öffnungen zugeführt ist, daß die Entnahme einer Probe aus dem zu analysierenden Gas durch ein durch die Wandung eines Abgaszuges in diesen hineinragenden Probenrohr erfolgt, das ein Ende des keramischen Rohres umschließt, daß eine Teilungswand in dem Probenrohr derart vorgesehen ist, daß sie sich von dem in den Abgaszug hineinragenden Ende des Probenrohres ins Innere des Probenrohres erstreckt, so daß dieses Innere des Probenrohres in einen Zuflußweg und einen Abflußweg aufgeteilt wird, daß zwischen Teilungswand und erster Elektrode ein Abstand bleibt und daß das Einströmen in den Zuflußweg durch den dynamischen Druck des im Abgaszug strömenden Gases erfolgt, wobei das Gas am anderen Ende der Teilungswand seine Strömungsrichtung umkehrt und durch den Abflußweg wieder in den Abgaszug zurückströmt.

Demzufolge ist die erfindungsgemäße Meßeinrichtung mit Vorteilen behaftet, da sie einfacher im Aufbau, billiger in der Herstellung und besser in der Zuverlässigkeit ist. Darüber hinaus ist entsprechend der Erfindung, wegen der Vermeidung von Bauteilen, die eine Temperaturabsenkung bewirken könnten, das Gas direkt in Kontakt mit den elektrolytischen Elementen mit festem Elektrolyten gebracht, weshalb keine Kondensation im Abgaszug stattfindet. Demzufolge ist bei der erfindungsgemäßen Meßeinrichtung die Wartung einfach.

Eine Weiterbildung der Erfindung ist im Anspruch 2 definiert.

Kurze Erläuterung der Zeichnung:

Fig. 1 ist eine Seitenansicht im Schnitt eines ersten Ausführungsbeispiels der Erfindung,

Fig. 2 ist die Frontansicht des Probenrohres in Fig. 1,

Fig. 3 ist ein Schnitt durch das Probenrohr ent-

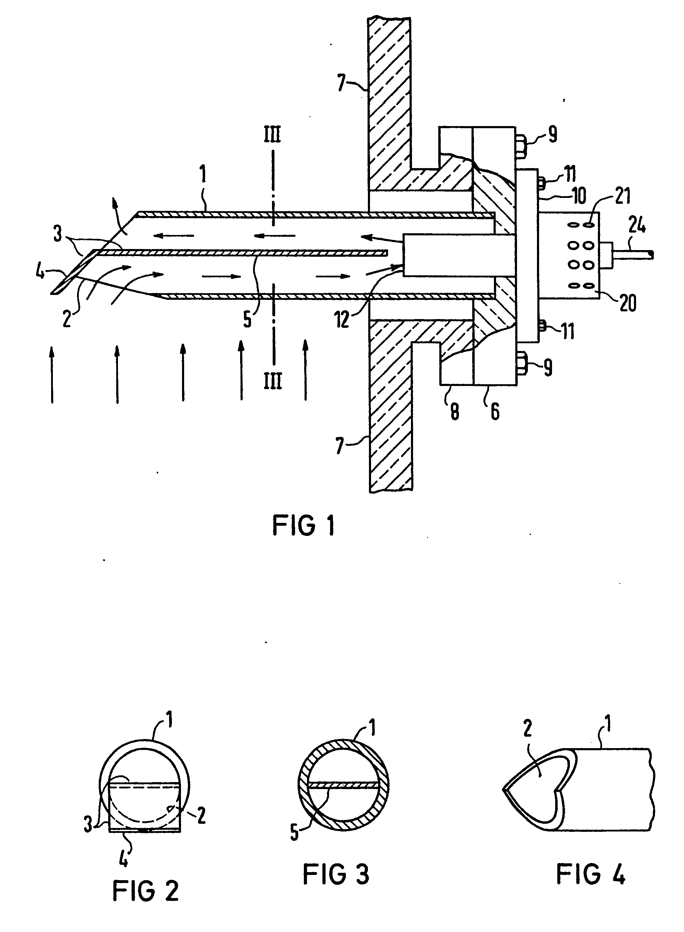

lang der Linie III-III in Fig. 1,

Fig. 4 ist eine perspektivische Darstellung des Endteils des Probenrohrs, aus dem die Teilungswand entfernt ist,

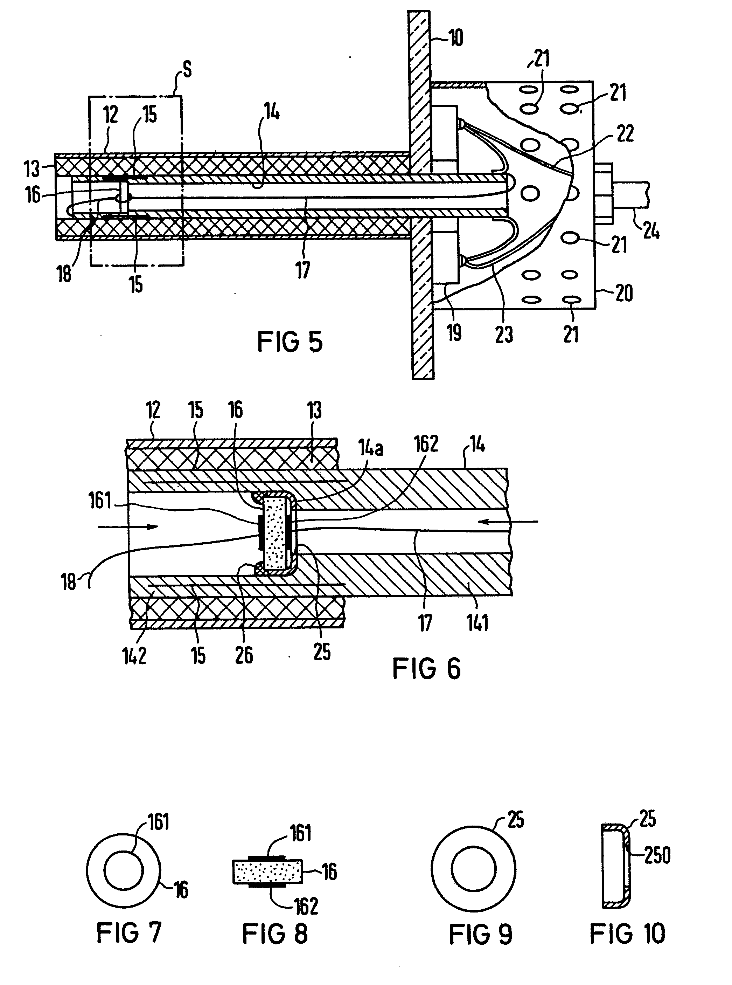

Fig. 5 ist eine Seitenansicht im Schnitt, die die Anordnung der Meßeinrichtung zur Erfassung des Sauerstoffgasgehaltes auf der Basis eines elektrolytischen Elements mit festem Elektrolyten veranschaulicht,

Fig. 6 ist eine vergrößerte Ansicht im Schnitt, die das Teil S der Fig. 5 zeigt,

Fig. 7 zeigt das elektrolytische Element mit festem Elektrolyten der Fig. 6,

Fig. 8 ist ein Längsschnitt durch das elektrolytische Element,

Fig. 9 zeigt eine Ansicht der metallischen Dichtung in Fig. 6,

Fig. 10 ist eine Schnittdarstellung dieser Dichtung,

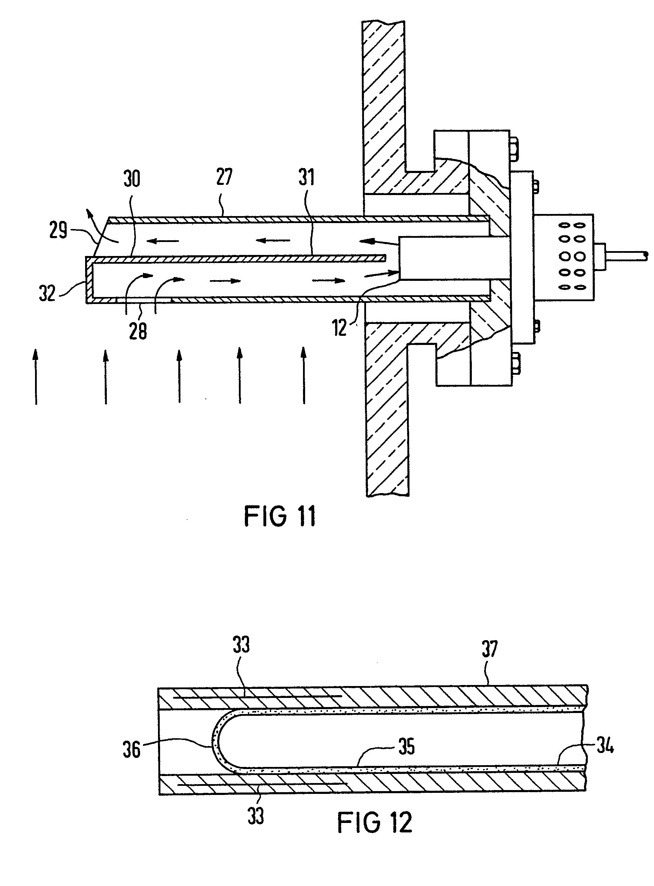

Fig. 11 zeigt ein weiteres Ausführungsbeispiel der Erfindung in einer Seitenansicht im Schnitt und

Fig. 12 ist eine Seitenansicht einer Abwandlung eines bei der Erfindung verwendeten Zirkoniumoxid-Elements im Schnitt.

Beste Art der Ausführung der Erfindung

Bevorzugte Ausführungsbeispiele der Erfindung werden in Einzelheiten unter Bezugnahme auf die vorliegende Zeichnung beschrieben.

Gemäß Fig. 1 ist ein Flansch 6 an dem Flansch 8 des Abgaszuges 7 mit Bolzen 9 befestigt. Die Basis des Probenrohres 1 für die Entnahme des Gases ist derart an den Flansch angeschweißt, daß der Endteil des Probenrohres 1 sich in den Abgaszug 7 hineinerstreckt. Ein Flansch 10 ist mit Bolzen 11 am Flansch 6 befestigt. Ein Schutzrohr 12 (in dem die eigentliche Meßeinrichtung zur Erfassung des Sauerstoffgasgehaltes mittels eines elektrolytischen Elements mit festem Elektrolyten enthalten ist) ist am Mittelteil des Flansches 10 befestigt. Das Schutzrohr 12 ist durch eine zentrale Öffnung des Flansches 6 in das Probenrohr 1 eingesetzt. Das Bezugszeichen 20 bezeichnet in Fig. 1 eine Abdeckung für die mit der Außenluft in Kontakt befindliche Seite der in dem Schutzrohr 12 angeordneten Meßeinrichtung. Die Abdeckung 20 weist eine Anzahl kleiner Löcher 21 auf, durch die die Luft strömt. Mit dem Bezugszeichen 24 ist ein Kabel versehen, an dem das Ausgangssignal der Meßeinrichtung zur Verfügung steht.

Das Probenrohr 1 ist beispielsweise aus einem rostfreien Rohr gefertigt. Sein Endteil ist von beiden Seiten her schief angeschnitten, wie in Fig. 4 gezeigt ist, während seine Basis — wie vorstehend beschrieben — an den Flansch 6 angeschweißt ist. Das Probenrohr 1 hat eine Teilungswand 3, die aus einem ebenen Teil 5 und einem abgebogenen Teil 4 besteht. Wie in Fig. 1 (und den Figuren 2 und 3) veranschaulicht ist, ist der ebene Teil 5 der Teilungswand 3 in das Probenrohr eingesetzt, wobei der abgebogene Teil 4 außenliegend ist. Daher wird das in dem Abgaszug strömende Gas durch den abgebogenen Teil 4 abgefangen, und entlang einer Seite des ebenen Teils 5 der Teilungswand in das Probenrohr hineingeführt, in Kontakt mit der Meßeinrichtung (genauer: mit der einen Elektrode) im Schutzrohr 12 gebracht und entlang der anderen Seite des ebenen Teils 5 in den Abgaszug zurückgeführt, wie durch die Pfeile angedeutet. Damit fließt das in dem Abgaszug strömende Abgas den eben beschriebenen Weg unter der Wirkung seines eigenen dynamischen Druckes. Der Endteil des Probenrohres 1 steht in Richtung auf die Mittelachse des Abgaszuges vor. Daher wird der beschriebene Fluß des Gases im Probenrohr selbst durch Verwirbelungen des Gases entlang der Wandungen des Abgaszuges nicht beeinträchtigt.

Die in Fig. 5 dargestellte Ansicht im Schnitt zeigt die Anordnung der eigentlichen Meßeinrichtung zur Erfassung des Sauerstoffgasgehaltes mittels eines elektrolytischen Elements mit festem Elektrolyten, wie sie in dem Schutzrohr 12 der Fig. 1 eingebaut ist.

Die in Fig. 5 dargestellte Meßeinrichtung zur Gasanalyse hat ein keramisches Rohr aus Aluminiumoxid oder dergleichen, das dazu geeignet ist, ein elektrolytisches Element 16 mit festem Elektrolyten (z. B. ein sogenanntes »Zirkoniumoxid-Element«) zu haltern. Das keramische Rohr 14 ist durch einen Wärmeisolator 13 abgedeckt. Diese Komponenten sind in dem Schutzrohr 12 angeordnet. Ein Ende des Schutzrohres 12 ist an der einen Seite des Flansches 10 angeschweißt, wie zuvor beschrieben, während der Anschlußklemmenteil 19 und die Abdeckung 20 auf der anderen Seite des Flansches 10 angebracht sind. Die Abdeckung 20 hat eine Anzahl kleiner Löcher 21, um ein einen Sauerstoffstandard darstellendes Medium (Luft in diesem Beispiel) in das keramische Rohr 14 einzulassen. Ein Heizelement 15 ist in Zick-Zack-Form in die Wandung des keramischen Rohres 14 eingelassen, um das elektrolytische Element 16 mit festem Elektrolyten zu beheizen. Elektrische Energie wird dem Heizelement 15 durch die Drähte 23 zugeführt. Die die Meßspannung führenden Leitungen 17 und 18 sind an die in Fig. 5 nicht dargestellten Elektroden angeschlossen. Die Leitungen 17 und 18 stehen mit den Drähten 22 in Verbindung. Die Drähte 22 und 23 bilden das vorher erwähnte Kabel 24, das nach außen geführt und an eine nicht dargestellte Anzeigeeinheit angeschlossen ist.

Fig. 6 ist eine vergrößerte Ansicht im Schnitt, die das wesentliche Teil (S) in Fig. 5 zeigt. Die Fig. 7 und 8 zeigen eine Ansicht und einen Längsschnitt des elektrolytischen Elements 16 mit festem Elektrolyten der Fig. 4. Die Fig. 9 und 10 stellen eine Ansicht und einen Schnitt der metallischen Dichtung in Fig. 6 dar.

Entsprechend Fig. 6 ist das keramische Rohr 14 ein zylindrisches Halterohr aus Aluminiumoxid, dessen Außendurchmesser über seine Länge gleich ist. Das keramische Rohr 14 hat jedoch zwei unterschiedliche Innendurchmesser. Das keramische Rohr 14 ist nämlich aus einem Teil 141 kleinen Innendurchmessers und einem Teil 142 großen Innendurchmessers aufgebaut. Ein ringförmiger Lagersitz 14a ist an der Grenzfläche zwischen dem Teil 141 kleinen Innendurchmessers und dem Teil 142 großen Innendurchmessers gebildet. Das Heizelement 15 ist umlaufend in der Wandung des keramischen Rohres 14 eingelassen, so daß es wenigstens das Gebiet des Lagersitzes 14a überdeckt. Der Wärmeisolator 13 ist um das keramische Rohr 14 herum angeordnet, so daß er das Gebiet des Heizelements 15 überdeckt. Ein scheibenförmiges Zirkoniumoxid-Element 16 ist als Teil des elektrolytischen Elements mit der metallischen Dichtung 25 im Lagersitz 14a des keramischen Rohres 14 angeordnet. Da die metallische Dichtung 25 während der Messung durch das Heizelement 15 auf ungefähr 850° C aufgeheizt wird, ist es notwendig, daß diese metallische Dichtung 25 aus einem Werkstoff gefertigt ist, der bei hohen Temperaturen stabil ist. Die Dichtung 25 ist so geformt, daß sie den Lagersitz 14a und die zylindrische Wandung des Zirkoniumoxid-Elements 16 überdeckt (Fig. 9 und 10). Die Dichtung 25 und das Zirkoniumoxid-Element 16 werden zusammengefügt auf etwa 600°C bis 800°C aufgeheizt und dann in den Lagersitz 14a eingepreßt. Damit werden das keramische Rohr 14, die Dichtung 25 und das Zirkoniumoxid-Element 16 fest zu einer Einheit zusammengefügt. Um die thermische Preßfügung der Dichtung 25 und des Zirkoniumoxid-Elementes 16 mit dem Lagersitz 14a durchführen zu können, ist es notwendig, daß der Werkstoff der Dichtung 25 aus einem Metall besteht, das bei hoher Temperatur stabil und weich ist. Die geeignetsten Beispiele von Metallen, die diese Forderung erfüllen können, sind Platin und Gold. Um zusätzlich zu verhindern, daß das Zirkoniumoxid-Element 16 und die Dichtung 25 sich von dem keramischen Rohr 14 lösen, sind sie mit diesem durch einen keramischen Kleber verbunden. Poröse Elektroden 161 und 162 sind an beiden Seiten des Zirkoniumoxid-Elements 16 befestigt und mit den Leitungen 17 und 18 verbunden, die aus dem keramischen Rohr 14 herausgeführt sind. Eine Art der an dem Zirkoniumoxid-Element 16 befestigten Elektroden 161 und 162 ist in Fig. 8 dargestellt.

In der so aufgebauten Meßeinrichtung zur Erfassung des Sauerstoffgasgehaltes wird das einen Sauerstoffstandard darstellende Medium, das heißt ein Bezugsgas (Luft) in den Teil 141 kleinen Innendurchmessers des keramischen Rohres 14 eingeführt, um in Berührung mit der Elektrode 162 des Zirkoniumoxid-Elements 16 gebracht zu werden, während das zu messende Gas in den Teil 142 großen Innendurchmessers des keramischen Rohres 14 eingeführt wird, um in Kontakt mit der Elektrode 161 des Zirkoniumoxid-Elements 16 zu geraten. Als Ergebnis entsteht in dem Zirkoniumoxid-Element 16 entsprechend der wohlbekannten Nernst-Gleichung eine elektromotorische Kraft (EMK). Demzufolge kann der Sauerstoffgehalt des zu untersuchenden Gases aus der Messung der elektromotorischen Kraft zwischen den Elektroden 161 und 162 bzw. den Leitungen 17 und 18 bestimmt werden.

Die Nernst-Gleichung lautet wie folgt:

$$E = \frac{R \cdot T}{4 F} \cdot \ln \frac{P_C}{P_A} \, .$$

In dieser Gleichung entspricht $P_C$ dem Partialdruck eines Gases (oder eines Festkörpers) bekannten Sauerstoffgehaltes, beispielsweise des Sauerstoffpartialdruckes der Luft. $P_A$ entspricht dem Sauerstoffpartialdruck in einem zu messenden Gas, R ist die Gas-Konstante, T die absolute Temperatur des Gases, F die Faraday-Konstante. Demzufolge kann der Sauerstoffgehalt eines zu messenden Gases aus der Messung der elektromotorischen Kraft E bestimmt werden.

Fig. 11 stellt einen Längsschnitt dar, der ein weiteres Ausführungsbeispiel der Erfindung zeigt.

Das in Fig. 11 dargestellte Ausführungsbeispiel unterscheidet sich von dem in Fig. 1 dargestellten Ausführungsbeispiel nur im Aufbau des Probenrohres 27. Der Endteil des Probenrohres 27 ist hierbei folgendermaßen abgewandelt: Ein Teil des Endes des Probenrohres 27 ist eine Öffnung 29, während der verbleibende Teil durch den abgebogenen Teil 32 der Teilungswand 30 abgeschlossen ist. In den unteren Endteil der Wandung des Probenrohres 27 ist nunmehr eine Öffnung 28 hineingeschnitten. Demzufolge tritt das in dem Abgaszug strömende Gas unter der Wirkung seines eigenen dynamischen Druckes — wie durch die Pfeile in Fig. 11 angedeutet — in das Probenrohr 27 durch diese Öffnung 28 ein, bewegt sich entlang der einen Seite des Teils 31 der Teilungswand 30 vorwärts bis zur Berührung der Elektrode im Schutzrohr 12 und strömt entlang der anderen Seite des Teils 31 durch die Öffnung in den Abgaszug zurück.

Fig. 12 zeigt in Form einer Seitenansicht im Schnitt eine Abwandlung des bei vorliegender Erfindung verwendeten Zirkoniumoxid-Elements. Hierbei ist ein Zirkoniumoxid-Element 34 in Form eines Testrohres in das keramische Rohr 37 eingesetzt. Das Bezugszeichen 33 bezeichnet in Fig. 12 ein Heizelement, die Bezugszeichen 35 und 36 markieren die Elektroden. Es ist klar, daß auch mit einem entsprechend Fig. 12 geformten Zirkoniumoxid-Element anstelle des scheibenförmigen Zirkoniumoxid-Elements gemäß Fig. 6 dieselben Wirkungen erreichbar sind.

Aus der vorstehenden Beschreibung ist es offensichtlich, daß bei einer Meßeinrichtung zur Erfassung des Sauerstoffgasgehaltes entsprechen der vorliegenden Erfindung der Einsatz einer Antriebsquelle für die Gewinnung einer zu vermessenden Gasprobe des im Abgaszug strömenden Gases überflüssig ist.

Industrielle Anwendbarkeit

Die erfindungsgemäße Meßeinrichtung zur Erfassung des Sauerstoffgasgehaltes kann mit Nutzen bei Fabriken verschiedener Art angewendet werden, um den Sauerstoffgehalt des direkt aus dem Abgaszug entnommenen Gases zu messen.

## Patentansprüche

1. Meßeinrichtung zur Erfassung des Sauerstoffgehaltes eines Gases, mit einem elektrolytischen Element, das aus einem eine Sauerstoffionenleitfähigkeit aufweisenden Festkörperelektrolyten (16; 34) mit einer ersten und einer zweiten porösen Elektrode (161, 162; 36, 35) auf je einer Seite des Festkörperelektrolyten (16; 34) besteht, wobei das elektrolytische Element (16; 161, 162; 34, 36, 35) in einem zylindrischen Rohr (14; 37) untergebracht ist, wobei dem Gas zur Erzeugung einer elektromotorischen Kraft (EMK) zwecks Analyse seines Sauerstoffgehaltes eine Probe entnommen wird, die unter Konvektionswirkung durch ein Ende des zylindrischen Rohres (14; 37) über einen Zuflußweg einströmt und mit einer ersten Elektrode (161; 36) in Kontakt gebracht wird, während Luft als Sauerstoffstandard durch das andere Ende des zylindrischen Rohres (14; 37) mit der zweiten Elektrode (162; 35) in Kontakt gebracht wird, und wobei ein Heizelement (15; 33) zur Beheizung des elektrolytischen Elements (16; 161, 162; 34, 36, 35) vorgesehen ist, dadurch gekennzeichnet, daß das zylindrische Rohr (14; 37) ein keramisches Rohr ist, in dem das elektrolytische Element (16; 161, 162; 34, 36, 35) derart angeordnet ist, daß es den hohlen Innenraum des keramischen Rohres (14; 37) — quer zu seiner Längsachse — in zwei Innenräume teilt, daß das Heizelement (15; 33) in der Wandung des keramischen Rohres (14; 37) verlegt ist, daß die Luft dem anderen Ende des zylindrischen Rohres (14; 37) durch in einer Abdeckung (20) dieses Endes des Rohres (14; 37) befindliche Öffnungen (21) zugeführt ist, daß die Entnahme einer Probe aus dem zu analysierenden Gas durch ein durch die Wandung eines Abgaszuges (7) in diesen hineinragendes Probenrohr (1; 27) erfolgt, das ein Ende des keramischen Rohres (14; 37) umschließt, daß eine Teilungswand (3; 30) in dem Probenrohr (1; 27) derart vorgesehen ist, daß sie sich von dem in den Abgaszug (7) hineinragenden Ende des Probenrohres (1; 27) ins Innere des Probenrohres (1; 27) erstreckt, so daß dieses Innere des Probenrohres in einen Zuflußweg und einen Abflußweg aufgeteilt wird, daß zwischen Teilungswand (3; 30) und erster Elektrode (161; 36) ein Abstand bleibt und daß das Einströmen in den Zuflußweg durch den dynamischen Druck des im Abgaszug (7) strömenden Gases erfolgt, wobei das Gas am anderen Ende der Teilungswand (3; 30) seine Strömungsrichtung umkehrt und durch den Abflußweg wieder in den Abgaszug (7) zurückströmt.

2. Meßeinrichtung nach Anspruch 1, dadurch gekennzeichnet, daß das keramische Rohr (14; 37) in einem Schutzrohr (12) angeordnet ist.

## Claims

1. A measuring device for determining the oxygen content of a gas, having an electrolytic element which consists of a solid electrolyte body (16; 34), which will conduct oxygen ions and has a first and a second porous electrode (161, 162; 36, 35) on respective sides of the solid electrolyte body (16; 34), wherein the electrolytic element (16, 161, 162; 34, 36, 35) is accommodated in a cylindrical pipe (14; 37), wherein, in order to produce an alectro-motive force (EMF), for the purpose of analysing its oxygen content, a sample is removed from the gas, which under the action of convection, flows in through one end of the cylindrical pipe (14; 37) over an inflow path and is brought into contact with a first electrode (161; 36), whilst air as oxygen standard medium is brought into contact with the second electrode (162; 35) through the other end of the cylindrical pipe (14; 37), and wherein a heating element is provided (15; 33) for heating the electrolytic element (16, 161, 162; 34, 36, 35), characterised in that the cylindrical pipe (14; 37) is a ceramic pipe, in which the electrolytic element (16, 161, 162; 34, 36, 35) is arranged in such a way that it devides the empty inner space of the ceramic pipe (14; 37) transversely to its longitudinal axis into two inner spaces; that the heating element (15; 33) is installed in the wall of the ceramic pipe (14; 37); that the air is fed to the other end of the cylindrical pipe (14; 37) through openings (21) which are arranged in a cover (20) for this end of the pipe (14; 37); that the withdrawal of a sample from the gas to be analysed is effected through a sampling pipe (1; 27) which projects into an exhaust gas outlet (7) through the wall of the latter and which surrounds one end of the ceramic pipe (14; 37); that a partition (3; 30) is arranged in the sampling pipe (1; 27) in such a way that it extends from the end of the sampling pipe (1; 27) which projects into the exhaust gas outlet (7), into the interior of the sampling pipe (1; 27) to divide the interior of the sampling pipe into an inlet and an outlet path; that a space remains between the partition (3; 30) and the first electrode (161; 36); and that the inflow into the inlet path is effected by the dynamic pressure of the gas flowing in the exhaust gas outlet (7), the gas reversing its flow direction at the other end of the partition (3; 30) and returning into the exhaust gas ourlet (7) through the outlet path.

2. A measuring device as claimed in claim 1, characterised in that the ceramic pipe (14; 37) is arranged in a protective pipe (12).

## Revendications

1. Dispositif de mesure pour déterminer la teneur en oxygène d'un gaz, comprenant un élément électrolytique constitué d'un électrolyte solide (16; 34) doué de conductivité pour les ions oxygène et des première et seconde électrodes (161, 162; 36, 35) poreuses appliquées respectivement sur chaque côté de l'électrolyte solide (16; 34), l'élément électrolytique (16, 161, 162; 34, 36, 35), étant logé dans un tube cylindrique (14; 37), un échantillon étant, pour la production d'une force électromotrice (f.e.m) prélevé du gaz en vue de l'analyse de sa teneur en oxygène; cet échantillon entrant, par un trajet d'entrée, par effet de convection, à l'une des extrémités du tube cylindrique (14; 37) et étant mis en contact avec une première électrode (161; 36), tandis que de l'air, servant d'échantillon témoin d'oxygène, est mis en contact, par l'autre extrémité du tube cylindrique (14; 37) avec la seconde électrode (162; 35), un élément de chauffage (15; 33) étant prévu pour chauffer l'élément électrolytique (16, 161, 162; 34, 36, 35), caractérisé en ce que le tube cylindrique (14; 37) est un tube en céramique, dans lequel l'élément électrolytique (16, 161, 162; 34, 36, 35) est logé de manière à subdiviser l'intérieur du tube en céramique (14; 37) — transversalement à son axe longitudinal — en deux chambres intérieures, en ce que l'élément de chauffage (15; 33) est monté dans la paroi du tube en céramique (14; 37), en ce que l'air est envoyé à l'autre extrémité du tube cylindrique (14; 37) par des orifices (21) se trouvant dans un couvercle (20) de cette extrémité du tube (14; 37), en ce que le prélèvement d'un échantillon du gaz à analyser s'effectue par un tube d'échantillonnage (1; 27) qui pénètre dans un conduit d'évacuation du gaz (7), en en traversant la paroi et qui est entouré par l'une des extrémités du tube en céramique (14; 37), en ce qu'une cloison de séparation (3; 30) est prévue dans le tube d'échantillonnage (1; 27) de manière à s'étendre de l'extrémité du tube d'échantillonnage (1; 27) qui pénètre dans le conduit d'évacuation du gaz (7), à l'intérieur du tube d'échantillonnage (1; 27), de sorte que l'intérieur du tube d'échantillonnage (1; 27) est subdivisé en une voie d'entrée et en une voie de sortie, en ce qu'il subsiste une distance entre la cloison de séparation (3; 30) et la première électrode (161; 36) et en ce que l'entrée dans la voie d'entrée s'effectue par la pression dynamique du gaz s'écoulant dans le conduit d'évacuation du gaz, le sens d'écoulement du gaz étant inversé à l'autre extrémité de la cloison de séparation (3; 30) avec retour du gaz par la voie de sortie dans le conduit d'évacuation du gaz (7).

2. Dispositif de mesure suivant la revendication 1, caractérisé en ce que le tube en céramique (14; 37) est disposé dans un tube de protection (12).

FIG 1

FIG 2

FIG 3

FIG 4

FIG 5

FIG 6

FIG 7

FIG 8

FIG 9

FIG 10

FIG 11

FIG 12